# FASCICULE DE BREVET EUROPEEN

(11) **EP 0 968 413 B1**
(45) Date de publication et mention de la délivrance du brevet: **22.02.2006**
(21) Numéro de dépôt: 99900965.7
(22) Date de dépôt: 20.01.1999
(51) Int. Cl.: G01N 21/72, G01N 27/64, G01N 27/62

(54) **APPAREIL COMBINANT LA SPECTROPHOTOMETRIE ET LA DETECTION DE L'IONISATION D'UNE FLAMME, POUR L'ANALYSE D'UNE COMPOSITION GAZEUSE**
SPEKTROPHOTOMETRIE UND FLAMMENIONISATIONSDETEKTION KOMBINIERENDE VORRICHTUNG ZUR UNTERSUCHUNG EINES GASFÖRMIGEN GEMISCHES
APPARATUS COMBINING SPECTROPHOTOMETRY AND FLAME IONISATION DETECTION FOR ANALYSING A GAS COMPOSITION

(30) Priorité: 22.01.1998 FR 9800761
(43) Date de publication de la demande: 05.01.2000
(73) Titulaire: PROENGIN, 78210 Saint-Cyr-l'Ecole (FR)
(72) Inventeur: LANCELIN, Henri, F-91200 Athis-Mons (FR); GUENE, Gilles, F-78990 Elancourt (FR); BLEUSE, Patrick, F-78390 Bois D'Arcy (FR); CLAUSIN, Pierre, F-92410 Ville d'Avray (FR)
(74) Mandataire: de Saint-Palais, Arnaud Marie
(86) Numéro de dépôt international: PCT/FR1999/000107
(87) Numéro de publication internationale: WO 1999/038000

(56) Documents cités:
- FR-A- 2 743 888
- GB-A- 2 138 997
- GB-A- 2 143 321
- US-A- 3 860 345
- US-A- 4 097 239
- SINGH H ET AL: "CORRELATION CHROMATOGRAMS FROM A TRIPLE-DETECTOR SYSTEM" JOURNAL OF CHROMATOGRAPHY A, vol. 737, no. 2, 21 juin 1996, pages 223-231, XP000589674

## Description

La présente invention concerne un appareil pour l'analyse d'une composition gazeuse combinant la spectrophotométrie et la détection de l'ionisation d'une flamme.

Elle s'applique notamment, mais non exclusivement, à l'analyse d'une composition gazeuse dans laquelle les éléments recherchés peuvent comprendre aussi bien des éléments engendrant des émissions lumineuses caractéristiques tels que du soufre, du phosphore, que des éléments faiblement émissifs (voire non émissifs) tels que des hydrocarbures.

D'une façon générale, on sait que la spectrophotométrie de flamme est une méthode consistant à effectuer l'analyse spectrographique du rayonnement produit par la flamme d'un mélange gazeux incluant les éléments à analyser et un gaz comburant tel que de l'hydrogène. Cette analyse s'effectue en isolant les radiations caractéristiques des éléments recherchés et en effectuant la mesure, par voie photométrique, de ces radiations. Cette méthode convient notamment à la détection d'éléments tels que le soufre, le phosphore, le sodium ou le lithium.

Pour pouvoir appliquer ce processus à certains éléments qui n'engendrent pas d'émission lumineuse caractéristique, comme le chlore, il est nécessaire de provoquer, préalablement à la combustion, une réaction de ces éléments avec un élément réactif pour obtenir un composé produisant une émission lumineuse détectable et identifiable.

Ainsi, dans le cas du chlore, la réaction préalable, qui a alors pour but d'engendrer des chlorures métalliques, s'effectue en réalisant une première combustion en milieu réducteur, en présence d'un métal réactif tel que du cuivre ou de l'Indium, du mélange gazeux comprenant l'hydrogène et le gaz à analyser.

Le mélange gazeux issu de cette première combustion est soumis à une deuxième combustion, mais cette fois en milieu oxydant, qui produit une émission lumineuse dont on effectue également l'analyse spectrophotométrique.

Le brevet FR 2 743 883 au nom de la demanderesse décrit un brûleur de ce type.

D'une façon analogue, les procédés d'analyse par détection de l'ionisation d'une flamme (FID) font intervenir un brûleur dans lequel on réalise en milieu oxydant, la combustion de l'échantillon à analyser dans un gaz comburant tel que de l'hydrogène. Des électrodes sont alors disposées au niveau de la chambre de combustion du brûleur de manière à pouvoir mesurer la conductivité de la zone où se produit la combustion.

Cette mesure permet de détecter la présence de constituants combustibles dans l'échantillon et, en particulier, de matières organiques telles que des hydrocarbures ou des dérivés d'hydrocarbures : La combustion de cette matière organique produit en effet, entre les électrodes de mesure, un courant d'ionisation en relation avec la concentration en matière organique. Ce procédé peut être étendu à une plus large gamme de composés en soumettant à la flamme un additif tel qu'un sel alcalin qui réagit avec ces composés de manière à produire une ionisation des gaz à analyser.

La publication Sing H. et al "Correlation chromatograms from a triple-detector system", Journal of Chromatography A, vol. 737, n° 2, 21 juin 1996, pages 223-231, décrit un appareil à une seule chambre de combustion qui combine la spectrophotométrie de flamme et la détection de l'ionisation de cette flamme.

Il s'avère que les analyses effectuées par l'un ou l'autre de ces procédés peuvent être faussées par la présence de composés que l'on ne souhaite pas détecter. Ainsi, par exemple, la détection de compositions organiques chlorées risque d'être faussée dans le cas d'échantillons contenant de fortes concentrations en brouillard salin.

L'invention a donc plus particulièrement pour but de supprimer ces inconvénients à l'aide d'un analyseur performant réalisable sous la forme d'un appareil portatif et autonome de manière à permettre d'effectuer des analyses in situ pratiquement instantanées, cet appareil combinant la spectrophotométrie et la détection de l'ionisation d'une flamme pour l'analyse d'une composition gazeuse, cet appareil comprenant un brûleur tubulaire comportant au moins une buse d'admission en continu d'un échantillon gazeux que l'on désire analyser et, coaxialement à cette buse :
- un premier manchon tubulaire présentant un fond traversé par ladite buse, ce manchon délimitant successivement avec ladite buse une chambre annulaire servant à l'admission d'un gaz comburant tel que de l'hydrogène, puis une première chambre de combustion s'étendant au-delà de l'extrémité de la buse,
- une source de gaz comburant connectée à ladite chambre annulaire,
- un second manchon tubulaire présentant un fond au travers duquel passe ladite buse, ce second manchon délimitant successivement avec le premier manchon une chambre annulaire servant à l'admission d'un gaz oxydant tel que de l'air, et une seconde chambre de combustion qui s'étend au-delà de l'extrémité du premier manchon tubulaire,ce deuxième manchon tubulaire comprenant un orifice d'évacuation des gaz issus de la combustion,
- un couple d'électrodes circulaires associé à un circuit de mesure de la conductivité ou de la résistance d'une zone de combustion située dans la deuxième chambre de combustion, l'une desdites électrodes consistant en le premier manchon tubulaire,
- un montage spectrophotométrique avec un orifice d'entrée, permettant d'effectuer une analyse spectrophotométrique du rayonnement lumineux engendré dans la deuxième chambre de combustion.

Selon l'invention, cet analyseur comprend aussi une optique focalisatrice coaxiale auxdits-manchons et conçue de manière à focaliser l'image des flammes et engendrées dans les deux chambres de combustion, sur l'orifice d'entrée dudit montage spectrophotométrique, et un processeur apte à traiter les informations délivrées par le circuit de mesure et par le montage spectrophotométrique pour en déduire la composition et la concentration en éléments recherchés de l'échantillon.

Avantageusement, le susdit couple d'électrodes pourra comprendre une électrode annulaire solidarisée au deuxième manchon tubulaire de manière à entourer au moins partiellement la deuxième chambre de combustion : dans ce cas, la première électrode pourra consister en le premier manchon tubulaire.

Bien entendu, le premier manchon tubulaire pourra comprendre, au moins au niveau de sa surface extérieure un revêtement en un matériau apte à émettre un gaz réactif sous l'effet dé la chaleur engendrée dans la première chambre de combustion : Ce revêtement pourra être réalisé par exemple en Indium de manière à pouvoir effectuer la détection de chlore.

Dans ce cas, le brûleur pourra comprendre un troisième manchon tubulaire coaxial qui délimite avec le premier manchon une chambre annulaire débouchant dans la deuxième chambre de combustion et servant à l'admission d'un courant d'hydrogène provenant de la susdite source. A cet effet, cette chambre annulaire est reliée à cette source par l'intermédiaire d'un circuit d'admission commandé par une vanne.

Grâce à ces dispositions, en combinant les informations délivrées par les deux moyens d'analyse (spectrophotométrie/ionisation de flamme), il devient possible de différencier considérablement le nombre d'éléments ou de substances recherchés et surtout, de s'affranchir des problèmes de chevauchement ou de masquage de raies spectrales caractéristiques d'éléments recherchés par d'autres, voire même par du bruit. Ainsi, il devient possible de résoudre le problème du masquage des composés chlorés hydrocarbonés par le brouillard salin : Il est en effet possible de déterminer la concentration du chlorure de sodium en relevant par spectrophotométrie la concentration en sodium. Pour obtenir ensuite la concentration des autres composés chlorés, on retranche cette concentration en sodium de la concentration totale de chlore déterminée grâce au gaz réactif émis par le revêtement du premier manchon tubulaire. La concentration en composés organiques chlorés peut être ensuite déterminée grâce aux informations détectées par le circuit de détection FID (qui détermine la concentration en composés hydrocarbonés).

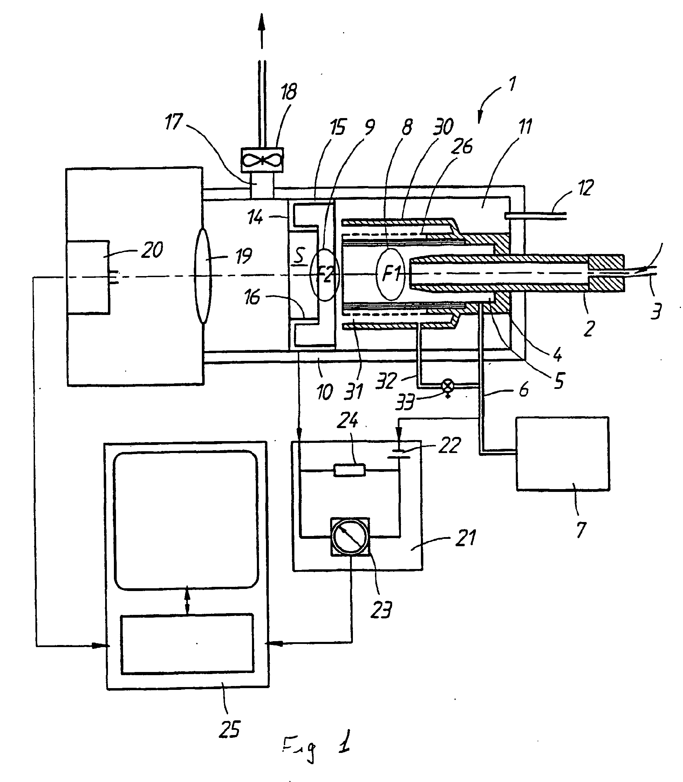

Un mode d'exécution de l'invention sera décrit ci-après, à titre d'exemple non limitatif, avec référence au dessin annexé dans lequel :
La figure unique est un schéma de principe d'un appareil d'analyse selon l'invention.

Dans cet exemple, l'appareil d'analyse comprend un brûleur tubulaire 1 comprenant une buse tubulaire 2 connectée d'un côté à un conduit d'amenée de gaz à analyser 3 et ouverte de l'autre côté et, coaxialement à cette buse 2 :
- un premier manchon tubulaire 4. de diamètre légèrement supérieur à celui de la buse 2 et axialement décalé par rapport à cette dernière, de manière à délimiter, d'une part, avec la buse 2, une première chambre annulaire d'admission 5 connectée à un circuit d'injection 6 d'hydrogène provenant d'une source 7 et, d'autre part, au-delà de la première buse 2, une chambre de combustion 8 dans laquelle la combustion partielle du gaz à analyser et de l'hydrogène engendre une première flamme F₁ : ce premier manchon tubulaire 4 se referme d'un côté sur la buse 2 et débouche, de l'autre côté, dans une deuxième chambre de combustion 9 ;
- un deuxième manchon tubulaire 10, de diamètre supérieur à celui du premier manchon tubulaire 4 et délimitant avec celui-ci, une deuxième chambre d'admission annulaire 11 connectée à un circuit d'admission 12 d'un gaz ou d'un mélange gazeux oxydant, par exemple de l'air : ce deuxième manchon 10 se referme d'un côté sur la buse 2 et/ou sur le premier manchon 4 et délimite, de l'autre côté, au-delà de celui-ci, la deuxième chambre de combustion 9, dans laquelle s'effectue une postcombustion en milieu oxydant des gaz issus de la première chambre de combustion 8 et de la chambre d'admission 11 ;
- une électrode annulaire 14, de section sensiblement en forme de C inversé, solidarisée par sa face de plus grand diamètre 15 au deuxième manchon 10, et dont la face de plus petit diamètre 16, qui présente une longueur axiale plus petite que celle de la face 15, délimite un conduit de sortie S de la chambre de combustion 9 : au-delà de l'électrode 14 (du côté opposé au manchon 4), le manchon 11 comprend un orifice latéral 17 dans lequel débouche un conduit d'échappement, muni d'une turbine 18 actionnée par un moteur ;
- une optique focalisatrice 19 telle qu'une lentille montée dans l'ouverture circulaire d'un opercule refermant le manchon 10, du côté opposé à la buse 2, cette optique focalisatrice 19 étant conçue de manière à focaliser le rayonnement lumineux émis dans les deux chambres de combustion 8, 9, en particulier la première chambre 8, sur l'orifice d'entrée d'un montage spectrophotométrique 20.

Dans cet exemple, le manchon tubulaire 4 est réalisé en un matériau électriquement conducteur et constitue une seconde électrode qui coopère avec l'électrode 14 en vue de permettre la mesure de la conductivité de la zone de la deuxième chambre 9 dans laquelle se développe la seconde flamme (flamme F₂).

Ces deux électrodes sont électriquement reliées à des moyens de mesure de résistance 21 qui comprennent une source de tension 22 montée en série avec un voltmètre 23, cet ensemble étant shunté par une résistance 24.

Les informations délivrées par le montage spectrophotométrique 20 et par le voltmètre 23 sont transmises à un ensemble processeur/afficheur 25 programmé de manière à déterminer la concentration en éléments et/ou en substances recherchées de l'échantillon gazeux amené par la buse 2.

Comme précédemment mentionné, la surface extérieure du manchon 4 pourra être recouverte par un revêtement 26 en un matériau apte à émettre un gaz réactif à la température à laquelle ce manchon 4 est amené sous l'effet de la combustion engendrée dans la première chambre de combustion 8. A titre d'exemple, ce matériau réactif pourra consister en de l'Indium, l'élément recherché correspondant étant alors le chlore.

Dans ce cas, le brûleur pourra comprendre un troisième manchon tubulaire coaxial 30 s'étendant dans l'espace intercalaire compris entre les manchons 4 et 10. Ce troisième manchon 30 délimite avec le manchon 4 une chambre annulaire débouchant dans la deuxième chambre de combustion 9 et servant à l'admission dans cette chambre 9 d'un courant d'hydrogène provenant de la source 7. A cet effet, la chambre annulaire 31 est connectée à la source 7 par l'intermédiaire d'un circuit d'admission 32 commandé par une vanne 33.

Le fonctionnement du brûleur précédemment décrit est alors le suivant :

L'ensemble des deux chambres 8, 9 est mis en dépression par la turbine 18 de manière à provoquer une aspiration du gaz à prélever dans la buse 2, à travers un ajutage prévu dans le circuit d'admission 3.

A l'intérieur du manchon 4, le flux de gaz aspiré (par exemple de l'air) se mélange avec le courant d'hydrogène injecté par la chambre d'admission 5, dans une proportion telle que la combustion produite dans la première chambre de combustion 8 soit réductrice. Le rayonnement lumineux engendré par la flamme F₁ présente dans la première chambre 8 permet de détecter grâce au montage spectrophotométrique 20 des composés tels que le phosphore et le soufre et à en déduire la présence en éléments recherchés.

La température engendrée par cette combustion provoque le chauffage du manchon 4 et, par conséquent, du revêtement 26.

Lorsqu'il atteint ou dépasse sa température de vaporisation, ce revêtement 26 émet une vapeur réactive qui se mélange au flux d'hydrogène injecté par la chambre d'admission 31 et à l'air provenant de la chambre d'admission 11.

Au sortir de ces chambres 11 et 31, le mélange gazeux réagit (combustion oxydante) avec le flux gazeux résultant de la combustion partielle produite dans la chambre 8 pour produire une flamme F₂ qui émet une lumière caractéristique d'un composant tel que du chlore qui a réagi avec la vapeur réactive d'Indium. Cette lumière, de même que celle produite dans la chambre 8, se trouve focalisée par la lentille 19 à l'entrée du montage spectrophotométrique 20.

Les informations délivrées par le montage 20 ainsi que par l'ampèremètre 23 (qui sont représentatives des variations de conductibilité de la flamme (ionisation) présente dans la seconde chambre de combustion) sont transmises au processeur 25, lequel est programmé de manière à interpréter ces informations et à en déduire des concentrations en éléments recherchés, qu'il s'agisse de composés, de substances chimiques ou même de substances biologiques (bactéries).

Bien entendu, dans le cas où l'échantillon gazeux que l'on veut analyser contient des particules en suspension (par exemple des bactéries ou des poussières), ces particules en brûlant engendrent des impulsions lumineuses (flash) de durée limitée qu'il est possible de compter pour obtenir le nombre de particules par unité de volume de gaz à analyser.

De même, pour les raisons précédemment évoquées, le brûleur pourra en outre comprendre des moyens permettant d'injecter dans la seconde chambre de combustion 9 un additif tel qu'un sel alcalin.

## Revendications

1. Appareil combinant la spectrophotométrie et la détection de l'ionisation d'une flamme, pour l'analyse d'une composition gazeuse, cet appareil comprenant un brûleur tubulaire comportant au moins une buse (2) d'admission en continu d'un échantillon gazeux que l'on désire analyser et, coaxialement à cette buse:
- un premier manchon tubulaire (4) présentant un fond traversé par ladite buse (2), ce manchon (4) délimitant successivement avec ladite buse (2) une chambre annulaire (5) servant à l'admission d'un gaz comburant tel que de l'hydrogène, puis une première chambre de combustion (8) s'étendant au-delà de l'extrémité de la buse (2),
- une source de gaz comburant (7) connectée à ladite chambre annulaire,
- un second manchon tubulaire (10) présentant un fond au travers duquel passe ladite buse (2), ce second manchon (10) délimitant successivement avec le premier manchon (4) une chambre annulaire (11) servant à l'admission d'un gaz oxydant tel que de l'air, et une seconde chambre de combustion (9) qui s'étend au-delà de l'extrémité du premier manchon tubulaire (4), ce deuxième manchon tubulaire (10) comprenant un orifice d'évacuation (17) des gaz issus de la combustion,
- un couple d'électrodes (14) circulaires associé à un circuit (21) de mesure de la conductivité ou de la résistance d'une zone de combustion située dans la deuxième chambre de combustion (9), l'une desdites électrodes consistant en le premier manchon tubulaire (4),
- un montage spectrophotométrique (20) avec un orifice d'entrée, permettant d'effectuer une analyse spectrophotométrique du rayonnement lumineux engendré dans les chambres de combustion,
- une optique focalisatrice (19) coaxiale auxdits manchons (4, 10) et conçue de manière à focaliser l'image des flammes (F₁) et (F₂) engendrées dans les deux chambres de combustion (8, 9) sur l'orifice d'entrée dudit montage spectrophotométrique (20),
- un processeur (25) apte à traiter les informations délivrées par le circuit de mesure (21) et par le montage spectrophotométrique (20) pour en déduire la composition et la concentration en éléments recherchés de l'échantillon.

2. Appareil selon la revendication 1,
**caractérisé en ce que** le susdit couple d'électrodes comprend une électrode annulaire (14) solidarisée au deuxième manchon tubulaire (10) de manière à entourer au moins partiellement la deuxième chambre de combustion (9).

3. Appareil selon l'une des revendications 1 et 2,
**caractérisé en ce que** le premier manchon tubulaire (4) comprend, au moins au niveau de sa surface extérieure un revêtement (26) en un matériau apte à émettre un gaz réactif sous l'effet de la chaleur engendrée dans la première chambre de combustion (8).

4. Appareil selon la revendication 3,
**caractérisé en ce que** le revêtement est réalisé en Indium.

5. Appareil selon l'une des revendications 3 et 4,
**caractérisé en ce que** le brûleur comprend un troisième manchon tubulaire coaxial (30) qui délimite avec le premier manchon (4) une chambre annulaire (31) débouchant dans la deuxième chambre de combustion (9) et servant à l'admission d'un courant d'hydrogène.

6. Appareil selon la revendication 5,
**caractérisé en ce qu'**il comprend un circuit d'admission (32) commandé par une vanne (33) reliant la source d'hydrogène (7) à la chambre annulaire (31).

7. Appareil selon l'une des revendications précédentes,
**caractérisé en ce qu'**il comprend en outre des moyens permettant d'injecter dans la seconde chambre de combustion (9) un additif tel qu'un sel alcalin,

8. Appareil selon l'une des revendications précédentes,
**caractérisé en ce qu'**en vue de s'affranchir du signal de bruit engendré par un brouillard salin dans la détection de composés chlorés, le processeur est programmé de manière à déterminer à partir des données spectrophotométriques la concentration en sodium de l'échantillon, puis à retrancher cette concentration de la concentration totale de chlore.

## Patentansprüche

1. Vorrichtung zur Spektrofotometrie und zur Ermittlung der lonisation einer Flamme, zwecks Analyse einer gasförmigen Zusammensetzung, mit einem rohrförmigen Brenner mit mindestens einer Düse (2) zum kontinuierlichen Einlass einer Gasprobe, die man analysieren möchte, sowie, koaxial zu dieser Düse:
- einer ersten rohrförmigen Muffe (4) mit einem von dieser Düse durchquerten Boden (2), wobei diese Muffe (4) anschließend mit besagter Düse (2) eine ringförmige Kammer (5) zwecks der Zulassung eines Verbrennungsgases wie z. B. Wasserstoff abgrenzt, dann ein erster Verbrennungsraum (8), der sich über das Ende der Düse (2) hinaus erstreckt,
- eine Verbrennungsgasquelle (7), die mit der ringförmigen Kammer verbunden ist,
- eine zweite rohrförmige Muffe (10) mit einem Boden, den besagte Düse (2) durchquert, wobei diese zweite Muffe (10) anschließend mit der ersten Muffe (4) eine ringförmige Kammer (11) zwecks Einlassung eines oxidierenden Gases wie z. B. Luft abgrenzt, und ein zweiter Verbrennungsraum (9), der sich bis jenseits des Endes der ersten rohrförmigen Muffe (4) erstreckt, wobei diese zweite rohrförmige Muffe eine Auslassöffnung (17) für die Gase aus der Verbrennung aufweist,
- ein Paar von kreisförmigen Elektroden (14), verbunden mit einer Schaltung (21) zur Messung der Leitfähigkeit oder des Widerstandes einer Brennzone in dem zweiten Verbrennungsraum (9), wobei die eine der besagten Elektroden aus der ersten rohrförmigen Muffe (4) besteht,
- eine spektrofotometrische Montage (20) mit einer Eintrittsöffnung, wodurch eine spektrofotometrische Analyse des in den Verbrennungskammern erzeugten Lichtstrahls möglich wird,
- eine Focussierungsoptik (19) koaxial zu den genannten Muffen (4 10), um das Bild der Flammen (F₁) und (F₂) zu fokussieren, die in den beiden Verbrennungskammern (8, 9) auf der Eintrittsöffnung der genannten spektrofotometrischen Montage (20) erzeugt wurden,
- ein Prozessor (25) zur Behandlung der durch die Messschaltung (21) und durch die spektrofotometrische Montage (20) ausgelieferten Informationen, um ihre Zusammensetzung und die Konzentration in gesuchten Elementen des Prüfgases zu erschließen.

2. Vorrichtung nach Anspruch 1,
**gekennzeichnet dadurch, dass** das besagte Paar von Elektroden eine ringförmige Elektrode (14) umfasst, die einstückig mit der zweiten rohrförmigen Muffe (10) ist, um mindestens teilweise den zweiten Verbrennungsraum (9) zu umgeben.

3. Vorrichtung nach einem der Ansprüche 1 und 2,
**gekennzeichnet dadurch, dass** die erste rohrförmige Muffe (4), mindestens auf Höhe ihrer Außenfläche, einen Überzug (26) aus einem Material umfasst, das in der Lage ist, unter der Wirkung der in dem ersten Verbrennungsraum (8) erzeugten Wärme ein reaktives Gas abzugeben.

4. Vorrichtung nach Anspruch 3,
**gekennzeichnet dadurch, dass** der Überzug aus Indium ist.

5. Vorrichtung nach einem der Ansprüche 3 und 4,
**gekennzeichnet dadurch, dass** der Brenner eine dritte koaxiale rohrförmige Muffe (30) umfasst, die mit der ersten Muffe (4) eine ringförmige Kammer (31) abgrenzt, die in den zweiten Verbrennungsraum (9) mündet zwecks Einlassung eines Stroms von Wasserstoff.

6. Vorrichtung nach Anspruch 5,
**gekennzeichnet dadurch, dass** sie eine Einlassschaltung (32) umfasst, von einem Ventil (33) gesteuert, die die Wasserstoffquelle (1) mit der ringförmigen Kammer (31) verbindet.

7. Vorrichtung nach einem der vorherigen Ansprüche,
**gekennzeichnet dadurch, dass** sie außerdem Mittel umfasst, wodurch es möglich ist, in den zweiten Verbrennungsraum (9) einen Zusatz wie ein Alkalisalz einzuspritzen.

8. Vorrichtung nach einem der vorherigen Ansprüche,
**gekennzeichnet dadurch, dass**, um sich vom durch einen Salznebel erzeugten Rauschsignal bei der Ermittlung von chlorhaltigen Verbindungen zu befreien, der Prozessor programmiert ist, um ausgehend von den spektrofotometrischen Daten die Natriumkonzentration des Probegases zu bestimmen und dann diese Konzentration von der gesamten Chlorkonzentration abzuziehen.

## Claims

1. An apparatus combining spectrophotometry and detection of ionization of a flame, for analyzing a gas composition, this apparatus comprising a tubular burner including at least one nozzle (2) for continuously admitting a gas sample which one desires to analyze and coaxially with this nozzle:
- a first tubular sleeve (4) having a bottom crossed by said nozzle (2), this sleeve (4) successively delimiting with said nozzle (2) an annular chamber (5) used for admitting a comburant gas such as hydrogen, and then a first combustion chamber (8) extending beyond the end of the nozzle (2),
- a source of comburant gas (7) connected to said annular chamber,
- a second tubular sleeve (10) having a bottom through which said nozzle (2) passes, this second sleeve (10) successively delimiting with the first sleeve (4) an annular chamber (11) used for admitting an oxidizing gas such as air, and a second combustion chamber (9) which extends beyond the end of the first tubular sleeve (4), this second tubular sleeve (10) comprising a port for discharging (17) gases from the combustion,
- a pair of circular electrodes (14) associated with a circuit (21) for measuring the conductivity or resistance of a combustion area located in the second combustion chamber (9), one of said electrodes consisting in the first tubular sleeve (4),
- a spectrophotometric assembly (20) with an inlet port allowing a spectrophotometric analysis of light radiation generated in the combustion chambers to be performed,
- focusing optics (19) coaxial with said sleeves (4, 10) and designed so as to focus the image of the flames (F₁ and F₂) generated in both combustion chambers on the inlet port of said spectrophotometric assembly (20),
- a processor (25) capable of processing information delivered by the measurement circuit (21) and by the spectrophotometric assembly (20) in order to infer therefrom the composition and the concentration of sought-after elements of the sample.

2. The apparatus according to claim 1,
**characterized in that** the aforesaid pair of electrodes comprises an annular electrode (14) permanently attached to the second tubular sleeve (10) so as to at least partially encircle the second combustion chamber (9).

3. The apparatus according to any of claims 1 and 2,
**characterized in that** the first tubular sleeve (4) comprises, at least at its external surface, a coating (26) in a material capable of emitting a reactive gas under the effect of heat generated in the first combustion chamber (8).

4. The apparatus according to claim 3,
**characterized in that** the coating is made in indium.

5. The apparatus according to any of claims 3 and 4,
**characterized in that** the burner comprises a third coaxial tubular sleeve (30) which delimits with the first sleeve (4) an annular chamber (31) opening into the second combustion chamber (9) and used for admitting a stream of hydrogen.

6. The apparatus according to claim 5,
**characterized in that** it comprises an admission circuit (32) controlled by a valve (33) connecting the hydrogen source (7) to the annular chamber (31).

7. The apparatus according to any of the preceding claims,
**characterized in that** it further comprises means allowing an additive such as an alkaline salt to be injected in the second combustion chamber (9).

8. The apparatus according to any of the preceding claims,
**characterized in that** in order to get rid of the noise signal generated by a salt mist in the detection of chlorinated compounds, the processor is programmed so as to determine from spectrometric data, the sodium concentration of the sample, and then to subtract this concentration from the total chlorine concentration.
